# FASCICULE DE BREVET EUROPEEN

(11) **EP 3 298 243 B1**
(45) Date de publication et mention de la délivrance du brevet: **01.05.2019**
(21) Numéro de dépôt: 16729314.1
(22) Date de dépôt: 20.05.2016
(51) Int. Cl.: F01D 9/06, F02C 7/06, F01D 25/18, F16L 41/10

(54) **ENSEMBLE DE TURBOMACHINE POUR LUBRIFIER UN SUPPORT DE PALIER**
TURBINENMOTOREINHEIT ZUM SCHMIEREN EINER LAGERHALTERUNG
TURBINE ENGINE UNIT FOR LUBRICATING A BEARING HOLDER

(30) Priorité: 22.05.2015 FR 1554621
(43) Date de publication de la demande: 28.03.2018
(73) Titulaire: Safran Aircraft Engines, 75015 Paris (FR)
(72) Inventeur: BOUILLER, Philippe, Pierre, Vincent, 77550 Moissy-Cramayel Cedex (FR); PATARD, Frédéric, François, Jean-Yves, 77550 Moissy-Cramayel Cedex (FR)
(74) Mandataire: Regimbeau
(86) Numéro de dépôt international: PCT/FR2016/051197
(87) Numéro de publication internationale: WO 2016/189234

(56) Documents cités:
- EP-A1- 1 553 263
- WO-A1-00/22281
- US-B1- 7 063 357

## Description

### DOMAINE GENERAL

L'invention concerne un ensemble de pièces de turbomachine destinées à être agencées entre deux turbines, cet ensemble de pièces étant prévu pour permettre la lubrification d'un support de palier de la turbomachine.

### ETAT DE L'ART

Une turbomachine conventionnelle peut comprendre deux turbines mobiles autour d'un axe principal de la turbomachine : une turbine haute pression et une turbine basse pression agencée en aval de la turbine haute pression, mobiles en rotation autour d'un axe principal.

Une telle turbomachine comprend également une structure appelée support de palier, qui s'étend entre les deux turbines. Le support de palier a, comme son nom l'indique, pour fonction de servir de support pour un ou des paliers mobiles.

La turbomachine comprend un carter s'étendant entre les deux turbines (on parle conventionnellement de carter « inter-turbine »), le carter étant agencé autour du support de palier par rapport à l'axe principal.

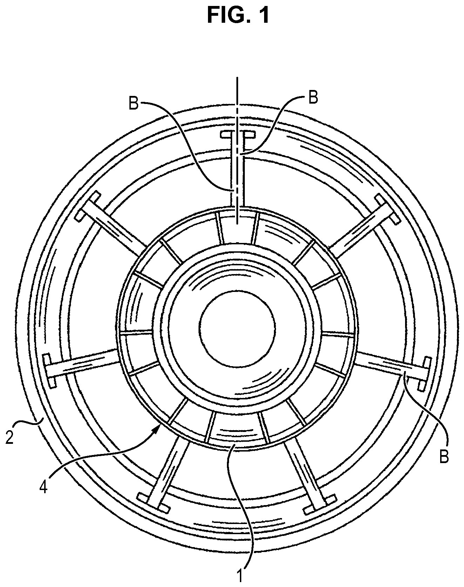

On a illustré en figure 1 un carter inter-turbine connu, qui comprend un moyeu 1, une pluralité de bras de liaison B et une virole externe 2. Les bras B sont agencés à des positions angulaires espacées les unes des autres par rapport à l'axe X (correspondant à l'axe de rotation des turbines).

Les bras de liaison B sont prévus pour être reliés à la virole externe 2, laquelle s'étend autour et à distance du moyeu 1.

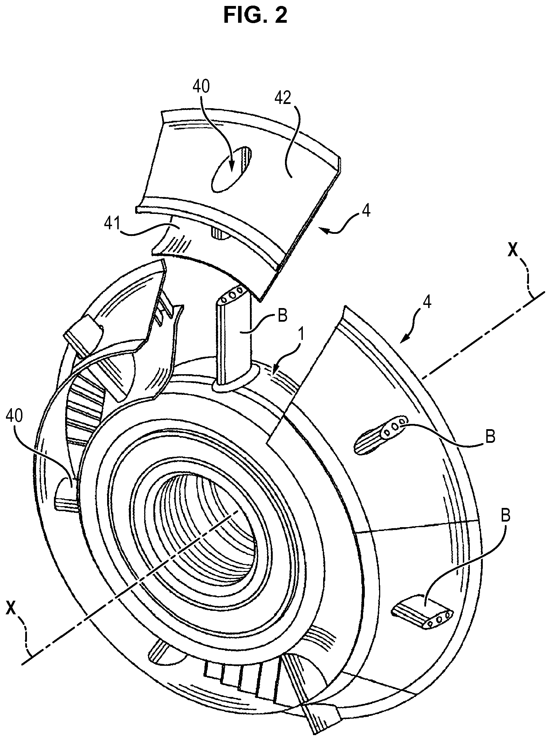

En référence à la figure 2, est disposé autour de chaque bras de liaison B un carénage 4 aérodynamique. Un carénage 4 comprend notamment un bras aérodynamique 40 creux qui entoure un bras de liaison B et deux parois en regard reliées entre elles par le bras aérodynamique 40.

L'ensemble des carénages aérodynamiques 4 sont formées pour définir conjointement un espace d'écoulement de gaz globalement annulaire entre le moyeu 1 et la virole, cet espace étant localement interrompu par chaque bras aérodynamique 40. Du gaz peut ainsi passer entre deux bras adjacents 40.

Les carénages aérodynamiques 4 sont adaptés pour rediriger du gaz en provenance de la turbine haute pression vers la turbine basse pression.

Or, le support de palier nécessite une alimentation en huile pour être lubrifié. L'alimentation en huile du support de palier est typiquement assurée par au moins une servitude (non représentée sur les figures 1 et 2) traversant radialement le corps du carter inter-turbine.

Afin de ne pas gêner l'écoulement d'un gaz entre les bras aérodynamiques 40, il est connu de ménager un passage creux dans un bras de liaison B et de loger une servitude s'étendant radialement à l'intérieur de ce passage. Ainsi, la servitude peut atteindre le support palier en traversant radialement le corps du carter inter-turbine.

Dans la plupart des turbomachines connues, la servitude est fixée au moyeu 1 par l'intermédiaire d'un raccord constituant une pièce indépendante. Le raccord présente une première extrémité adaptée pour être fixée sur le support de palier, et une deuxième extrémité, opposée à la première extrémité, adaptée pour être fixée à la servitude partiellement logée à l'intérieur d'un bras structurel.

Le raccord est confiné dans un espace laissé entre le support de palier et le moyeu du carter inter-turbine qui l'entoure.

Un objectif généralement recherché par les concepteurs de turbomachine est de rapprocher au maximum le moyeu du carter inter-turbine vers le support de palier, afin d'augmenter son débit de gaz pour un encombrement prédéterminé du carter (dans l'exemple d, ceci revient à rapprocher le moyeu 1 de l'axe X).

Or, le raccord situé entre le moyeu et le support de palier présente un diamètre relativement encombrant qui limite un tel rapprochement.

Une première solution permettant de contourner cette limitation pourrait théoriquement être de loger le raccord à l'intérieur du bras de liaison B. Toutefois, une telle solution obligerait à augmenter le diamètre du bras B, et par conséquent celui du bras aérodynamique 40 qui l'entoure. Le bras 40 occuperait alors une place plus importante dans l'espace d'écoulement de gaz défini entre le moyeu et la virole externe du carter-inter turbine, ce qui diminuerait le débit de gaz maximal autorisé entre les deux turbines.

Une autre solution pour rapprocher le moyeu 1 de l'axe de la turbomachine (et du support de palier) a été proposée dans le document CA 2715600 A1. Cette solution consiste en une servitude directement vissée au moyeu. Aucune pièce d'interconnexion encombrante n'est alors utilisée.

En référence à la figure 2 du document CA 2715600 A1, cette servitude comprend ainsi une première portion d'extrémité destinée à être vissée au support de palier, ainsi qu'une deuxième portion d'extrémité, opposée à la première portion d'extrémité, présentant une collerette et un support de serrage de la servitude.

Les deux portions d'extrémités sont jointes par une portion intermédiaire prévue pour loger à l'intérieur d'un bras structurel creux s'étendant entre le moyeu et la virole externe.

Lorsque la portion d'extrémité est vissée au support de palier et que la portion intermédiaire loge à l'intérieur du bras structurel creux, le support de serrage se trouve plus éloigné du support de palier que la virole externe.

Or, La collerette limite le déplacement axial de la servitude une fois vissée au support de palier. La présence de cette collerette impose un vissage de la servitude au moyeu seulement après le montage du de la virole externe autour du moyeu.

Par ailleurs, pour fixer la servitude au moyeu, un opérateur met en prise un outil de serrage avec le support de serrage, et entraîne en rotation la servitude. Cette rotation est transmise à l'extrémité de vissage de la servitude par l'intermédiaire de la portion.

La portion intermédiaire de la servitude logée à l'intérieur du bras est alors soumise à un effort de torsion conséquent au cours du vissage de la servitude avec le moyeu.

Cet effort de torsion impose d'augmenter l'épaisseur de la paroi tubulaire de la servitude au niveau de la portion intermédiaire.

De plus, si l'on veut que la servitude conserve un débit d'alimentation constant, il est nécessaire de ne pas diminuer son diamètre interne, mais d'augmenter son diamètre externe et par conséquent son encombrement dans le bras radial qui le loge.

Cette augmentation de diamètre externe de la servitude oblige encore d'augmenter les dimensions du bras structurel qu'elle traverse, avec pour conséquence de réduit le débit de gaz dans l'espace annulaire entre les deux.

Le document WO0022281 A1 divulgue un ensemble pour turbomachine selon le préambule de la revendication 1.

### PRESENTATION DE L'INVENTION

L'invention vise à rapprocher, dans une turbomachine, un carter inter-turbine d'un support de palier nécessitant une lubrification, sans pour autant réduire le débit de gaz transitant dans le carter inter-turbine ni réduire le débit d'alimentation en lubrifiant du support de palier.

L'invention vise également à simplifier le démontage et/ou le remplacement d'un carter-inter-turbine. Il est en particulier recherché de pouvoir démonter le carter inter-turbine sans avoir à démonter complètement la servitude.

L'invention vise aussi à limiter la dégradation de la connexion de la servitude avec le support de palier provoquée par des démontages du carter inter-turbine.
Il est donc proposé un ensemble pour turbomachine selon la revendication 1.

Premièrement, le support de serrage de l'ensemble selon la présente invention se trouve beaucoup plus proche de la portion d'extrémité destinée à être vissée sur le support palier, par rapport à l'agencement proposé dans l'art antérieur.

Lorsqu'un opérateur met en rotation le support de serrage à l'aide d'un outil de serrage pour visser la servitude au support de palier, aucun effort de torsion important n'est transmis à la portion intermédiaire prévue pour loger dans le bras structurel creux.

En conséquence, il est parfaitement possible de réduire le diamètre externe de la portion intermédiaire, sans risque de déformation ou de cassure de la servitude en raison d'un vissage trop serré. Les dimensions du bras de liaison peuvent donc être réduites, ce qui augmente le débit de gaz dans l'espace d'écoulement de gaz défini entre le moyeu et la virole externe du carter inter-turbine.

Par ailleurs, le fait d'agencer le support de serrage entre la portion intermédiaire qui loge dans le bras structurel et la potion d'extrémité vissée au support palier entraîne que le support de serrage se trouve entre le moyeu et le support de palier.

Par ailleurs, le support de serrage ne nécessite pas un encombrement radial important. De la sorte, il est possible, grâce à l'invention, de rapprocher davantage le carter inter-turbine du support palier selon une direction radiale, comparativement aux turbomachines dont les servitudes sont connectées au support au moyen d'une pièce d'interconnexion supplémentaire agencée radialement entre ces servitude et le support de palier.

L'invention peut également être complétée par les caractéristiques suivantes, prises seules ou en une quelconque de leurs combinaisons techniquement possibles.

L'ensemble peut comprendre des moyens d'étanchéité adaptés pour mettre la portion d'extrémité en communication fluidique étanche avec le support de palier, lorsque la portion d'extrémité est vissée au moyeu.

La portion de serrage peut comprendre une pluralité de pans de serrage définissant une surface libre de section polygonale préhensible par un outil de serrage.

Il peut également être prévu que :
- la virole soit de forme annulaire autour d'un axe principal, et présente au moins un orifice radial traversant,
- la première canalisation comprenne une deuxième portion d'extrémité opposée à la portion d'extrémité vissable au moyeu,
- la première canalisation présente une longueur suffisamment courte pour autoriser une insertion, suivant l'axe principal, du moyeu et de la première canalisation vissée au moyeu dans la virole, jusqu'à ce que la deuxième portion d'extrémité soit alignée avec l'orifice radial, la virole s'étendant autour de la première canalisation vissée au moyeu.

La servitude peut comprendre en outre une deuxième canalisation adaptée pour être mise en communication fluidique avec la première canalisation, la servitude étant de dimensions adaptées pour traverser l'orifice radial de la virole.

La première canalisation peut comprendre une deuxième portion d'extrémité opposée à la portion d'extrémité vissable au moyeu, la servitude présentant, depuis de la portion intermédiaire incluse jusqu'à la deuxième portion d'extrémité, un diamètre externe inférieur ou égal au diamètre interne minimal du bras.

La servitude peut comprendre en outre un calorifugeage adapté pour s'étendre autour de la portion intermédiaire de la première canalisation, le calorifugeage ayant un diamètre externe strictement inférieur ou égal au diamètre interne minimal du bras.

La portion d'extrémité peut présenter une surface externe de guidage, et le moyeu comprendre une cavité pour recevoir la portion d'extrémité vissable, la cavité présentant un diamètre complémentaire de la surface externe de guidage.

La première canalisation peut comprendre une portion formant collerette agencée entre la portion d'extrémité vissable et la portion de serrage, la collerette présentant une surface adaptée pour venir en butée contre le moyeu au cours du vissage de la portion d'extrémité au moyeu.

Selon un deuxième aspect de l'invention, il est proposé un procédé d'assemblage de cet ensemble pour turbomachine selon la revendication 10. fixation du bras à la virole, dans lequel l'étape de vissage est mise en oeuvre avant l'étape d'insertion et/ou avant l'étape de fixation.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà discutée, est une vue en coupe d'un carter inter-turbine de turbomachine.
- La figure 2, déjà discutée, est une vue en trois dimensions du carter inter-turbine représenté en figure 1.
- La figure 3 est une vue de profil partielle d'un ensemble pour turbomachine selon un mode de réalisation de l'invention.

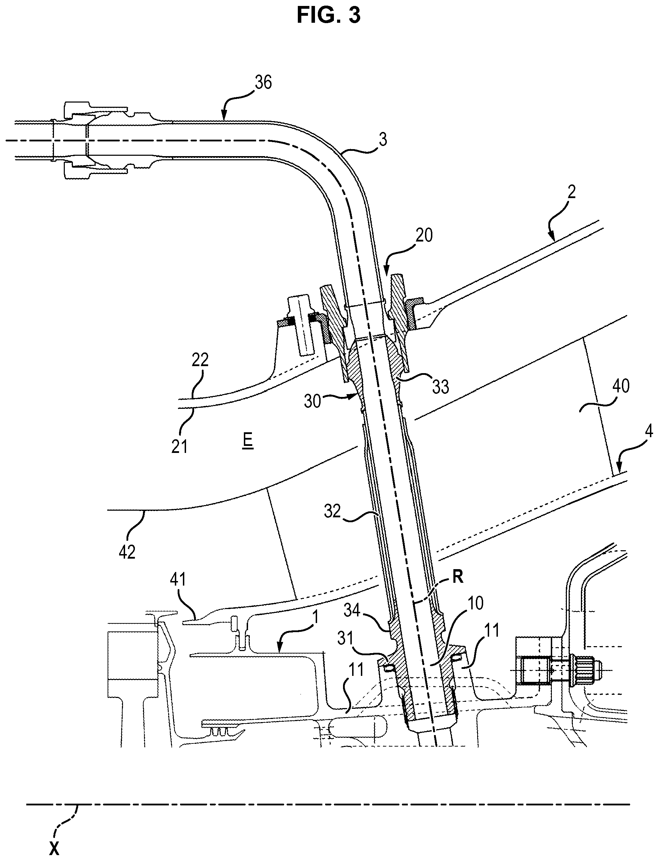

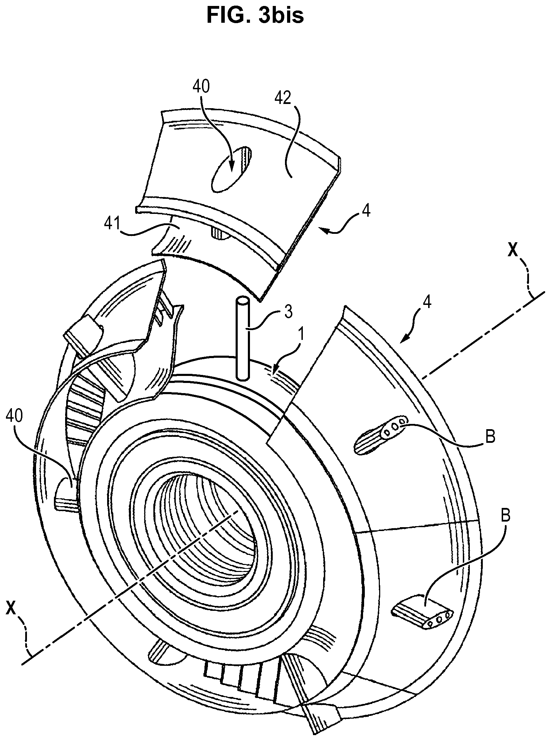

- La figure 3bis est une vue est une vue partielle en trois dimensions de l'ensemble pour turbomachine déjà représenté en figure 3.

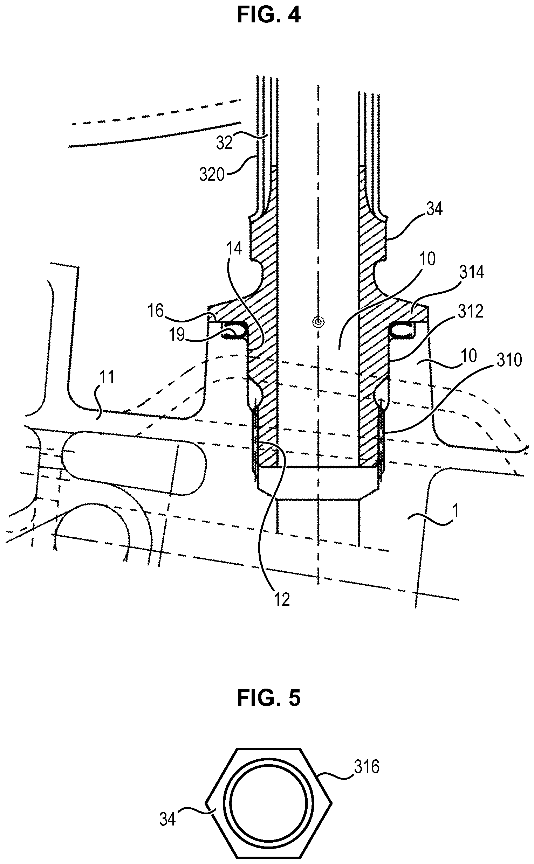

- La figure 4 est une vue agrandie d'une partie de l'ensemble pour turbomachine représenté en figure 3.
- La figure 5 illustre une section de servitude selon un mode de réalisation de l'invention.

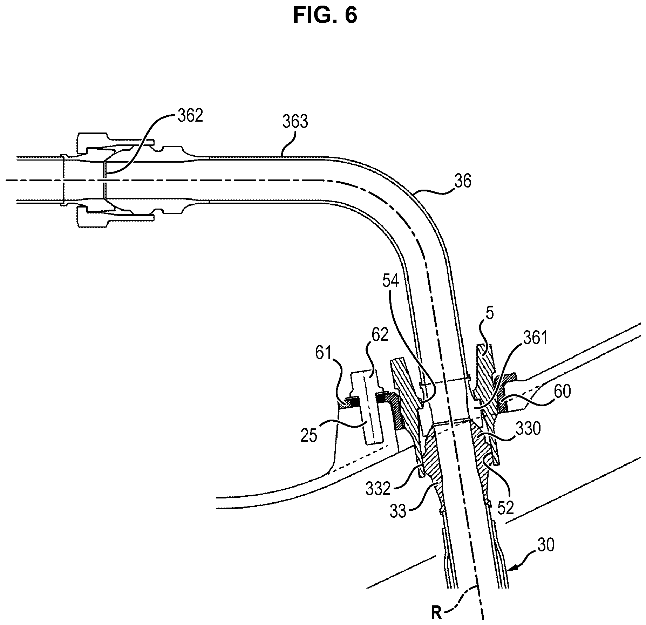

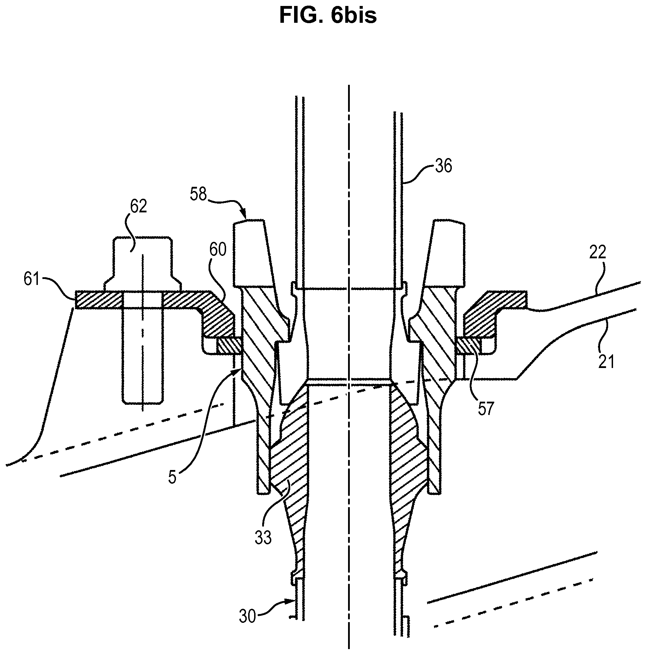

- La figures 6 est une vue agrandie d'une autre partie de l'ensemble pour turbomachine représenté en figure 3, selon un premier mode de réalisation.
- La figures 6bis est une vue agrandie d'une autre partie de l'ensemble pour turbomachine représenté en figure 3, selon un deuxième mode de réalisation mode de réalisation.

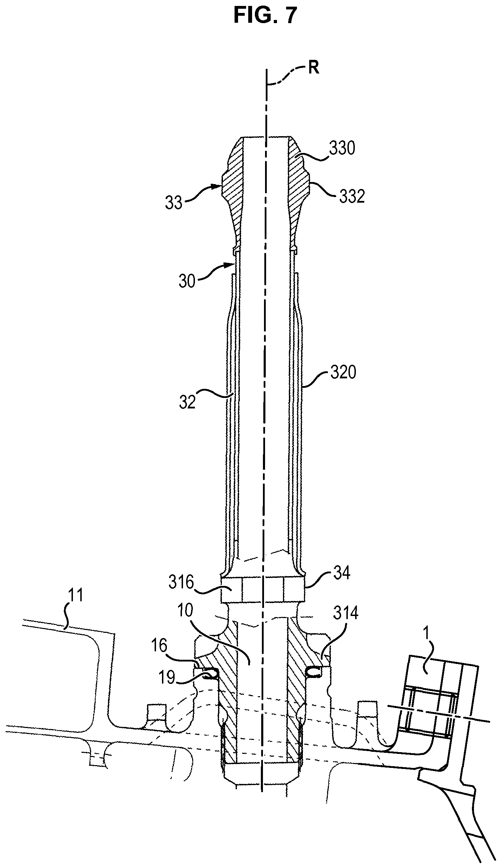

- Les figures 7 à 12 représentent des pièces de l'ensemble pour turbomachines représenté en figure 3, à différents stades de son assemblage.
Sur l'ensemble des figures, les éléments similaires portent des références identiques.

### DESCRIPTION DETAILLEE DE L'INVENTION

En référence aux figures 3 et 3bis, Un ensemble pour turbomachine comprend un carter-inter-turbine s'étendant autour d'un axe X.

Dans ce qui suit, on désigne par le terme « centrifuge » un sens sens de rapprochement vers l'axe principal X, et par le terme « centripète » un sens d'éloignement de l'axe principal X.

Dans la turbomachine, le carter inter-turbine est se trouve entre deux turbines mobile en rotation autour de cet axe X.

Le carter turbine comprend un moyeu 1 et une virole externe 2, et au moins un bras de liaison B reliant le moyeu à la virole externe 2.

Le moyeu 1 s'étend autour de l'axe principal X de la turbomachine. Le moyeu présente un corps globalement annulaire s'étendant d'un arbre de la turbomachine centré sur cet axe X (non-illustré sur les figures).

Le moyeu 1 comprend un support de palier.

Le moyeu 1 présente également une surface radialement externe 11 dans laquelle débouche au moins un orifice d'accès 10.

L'orifice 10 donne accès à une partie du support de palier nécessitant une lubrification.

La virole externe 2 présente également une forme annulaire de plus grand diamètre interne que le diamètre externe du moyeu. La virole externe 2 s'étend autour du moyeu 1 à distance de celui-ci.

La virole externe 2 comprend une paroi annulaire présentant une surface radialement interne 21 par rapport à l'axe X, et une surface radialement externe 22 opposée à la surface 21.

La virole comprend un orifice 20, ci-après dénommé orifice radial 20, débouchant dans ses deux surfaces opposées 21 et 22.

Bien que non représentés sur la figure 3, les bras de liaison B relient le moyeu 1 à la virole externe 2 et sont agencé en des positions angulaires différentes les unes des autres autour de l'axe X.

Les bras de liaison B s'étendent radialement depuis la surface radialement externe 11 du moyeu 1, jusqu'à la surface radialement interne 22 de la virole 2.

Est ainsi ménagé dans le carter, entre le moyeu 1 et la virole 2, un espace d'écoulement de forme globalement annulaire localement coupé par chaque bras de liaison B.

Le carter inter-turbine comprend également une pluralité de carénages aérodynamiques 4 appelés « profils aérodynamiques », lesquels sont intercalés entre le moyeu 1 et la virole externe 2, et entre des bras de liaison B. Chacune de ces pièces 4 s'étend sur un secteur angulaire limité autour de l'axe X. Les pièces 4 sont prévues pour que, une fois assemblées entre elles, elles définissent ensemble une forme annulaire autour de l'axe X logeable dans l'espace annulaire ménagé entre le moyeu 1 et la virole 2.

La pluralité de carénages 4 définit une veine d'air agencée entre le moyeu 1 et la virole externe 2. La veine a pour fonction de rediriger de l'air en provenance de la turbine agencée en amont du carter inter-turbine, vers la turbine en aval du carter inter-turbine.

Un profil aérodynamique 4 donné comprend typiquement une paroi radialement interne 41, une paroi radialement externe 42, et un bras aérodynamique 40 creux reliant les deux parois 41 et 42, conformément à la figure 2 déjà décrite en introduction.

La paroi radialement interne 41 est prévue pour être disposée en regard du moyeu 1, et la paroi radialement externe est prévue pour être disposée en regard de la virole 2.

Le bras aérodynamique 40 s'étend selon une direction sensiblement radiale par rapport à l'axe X.

Le bras aérodynamique 40 creux de la pièce aérodynamique 4 définit un passage interne radial par rapport à l'axe X, lorsque la pièce 4 est agencée entre le moyeu 1 et la virole externe 2.

Le passage interne d'un bras de liaison B est destiné à être aligné radialement avec un orifice radial 20 formé dans la virole externe, et avec un orifice d'accès 10 formé dans le moyeu, lorsque le carénage 4 est installé entre le moyeu 1 et la virole 2.

Le bras aérodynamique 40 est rectiligne.

L'ensemble comprend donc deux types de bras différents agencés radialement entre le moyeu 1 et la virole 2 : d'une part les bras de liaison B, ayant une fonction principale de maintien mécanique du moyeu 1 par rapport à la virole 2, et d'autres par les bras aérodynamiques 40, qui sont agencés en des positions angulaires différentes des positions angulaires des bras de liaison B, et qui ont pour fonction principale de participer à la délimitation de la veine d'écoulement de fluide entre deux turbines.

On peut par exemple prévoir une disposition en alternance des bras B et 40 autour de l'axe X principal.

L'ensemble pour turbomachine comprend également au moins une servitude 3. La servitude 3 a pour fonction principale d'alimenter en lubrifiant le support de palier du moyeu 1, par exemple en huile.

La servitude 3 comprend une première canalisation 30 prévue pour être raccordée au moyeu 1.

La première canalisation 30 comprend un corps creux globalement rectiligne.

La première canalisation présente est de section adaptée pour être logée à l'intérieur d'un bras aérodynamique 40, sans toutefois que la surface externe de la première canalisation 30 ne touche la surface interne du bras 40, de sorte qu'il demeure un espace résiduel entre la canalisation 30 et le bras 40 qui la loge.

La première canalisation 30 comprend une première portion d'extrémité 31, une deuxième portion d'extrémité 33, et une portion intermédiaire 32 reliant ensemble les deux portions d'extrémité 31 et 33.

En référence à la figure 4, le moyeu 1 comprend une cavité débouchant dans sa surface radialement extérieure 11 par l'orifice d'accès 10.

La cavité est de forme adaptée pour recevoir au moins partiellement la portion d'extrémité 31 de la première canalisation 30.

Le moyeu 1 comprend un filetage interne 12 donnant dans la cavité de façon à former un écrou.

Le moyeu 1 comprend en outre une surface interne de guidage 14 donnant dans la cavité, centrée sur un axe radial R, par exemple sécant avec l'axe principal X de la turbomachine.

La surface de guidage 14 est cylindrique de révolution (c'est-à-dire de section circulaire).

Le moyeu 1 présente en outre un bord libre circonférentiel 16 faisant saillie radialement vers l'extérieur depuis la surface 11 par rapport à l'axe X. Le bord 16 définit un périmètre de l'orifice d'accès 10.

La portion d'extrémité 31 de la canalisation 30 est adaptée pour être vissée au moyeu 1 ; elle présente un orifice axial de sortie d'huile.

La portion 31 présente en particulier un filetage externe 310 formant vis pour coopérer avec le filetage interne 12 formant écrou.

Lorsque les filetages 12 et 310 sont engagés l'un dans l'autre, la première canalisation est mise en communication fluidique avec le support de palier du moyeu 1.

La portion d'extrémité 31 présente en outre une surface circonférentielle de guidage 312 complémentaire de la surface interne 14.

Les surfaces 14 et 312 permettent d'interdire une mobilité selon toute autre direction que l'axe de vissage R de la portion d'extrémité 31 par rapport au moyeu, lorsque la portion 31 est vissée au moyeu par coopération mutuelle des filetages 12 et 310.

La portion 31 présente également une collerette 314 de diamètre supérieur au diamètre de l'orifice 10 défini par le bord 16. La collerette présente notamment une surface prévue pour buter contre le bord 16 lorsque la portion 31 est insérée, suivant l'axe radial R et selon une direction centrifuge, dans la cavité, via l'orifice 10.

La collerette 314 limite donc la course d'insertion et/ou de vissage de la portion d'extrémité 31 dans le moyeu 1.

Le moyeu 1 présente une paroi se terminant par le bord 16 présentant un épaulement en regard de la cavité. Cet épaulement définit au moins un logement s'étendant entre la portion d'extrémité 31 de la canalisation 30 et le moyeu 1 lorsque les filetages 310 et 12 sont engagés l'un dans l'autre. Sont logés dans ce logement des moyens d'étanchéité 19 permettant d'étanchéifier la connexion fluidique entre la portion d'extrémité 31 de la première canalisation 30 et le moyeu 1. Par exemple, ces moyens d'étanchéité 19 comprennent un ou plusieurs joints métalliques présentant une forme en C, particulièrement adaptés à un environnement aussi chaud qu'un support de palier.

La canalisation 30 comprend par ailleurs une portion de serrage 34 préhensible par un outil de serrage afin d'appliquer un couple de serrage à la servitude.

La collerette 314 est localisée entre la portion de serrage 34 et la surface de guidage 312.

En référence à la **figure 5****,** la portion de serrage 34 comprend une pluralité de pans de serrage définissant une surface libre 316 de section polygonale préhensible par l'outil de serrage, tel qu'une clé de serrage.

Le nombre de pans de serrage peut être égal à 6 et la surface 316 être dans ce cas de section hexagonale.

De retour à la figure 4, la portion intermédiaire 32 de la première canalisation 30 est destinée à être logée à l'intérieur d'un bras aérodynamique 40.

La portion de serrage 34 est localisée entre la portion intermédiaire 32 et la portion d'extrémité 31.

La portion de serrage 34 est plus précisément localisée entre la portion intermédiaire 32 et la collerette 314.

La portion intermédiaire 32 est par exemple de forme tubulaire.

La portion intermédiaire 32 présente un diamètre externe strictement inférieur au diamètre interne minimal du bras 40 qui la loge, de façon à permettre que la portion intermédiaire ne touche pas la surface intérieure du bras 40, mais se trouve à distance de celui-ci.

La canalisation 30 peut être dimensionnée pour assurer une fonction de transit d'un fluide sous pression, mais par pour une fonction de support ou soutènement de pièces mécaniques comme c'est le cas des bras B. La section de la canalisation 30 peut donc être définie selon les pratiques de conception optimisée des canalisations simple et préférentiellement être selon des dimensions normalisées.

La portion d'extrémité 33, opposée à la portion d'extrémité 31, prolonge la portion intermédiaire 32.

La portion 33 est pourvue d'un orifice axial d'entrée d'huile destiné à être aligné avec l'orifice radial 20 formé dans la virole externe 2.

La portion 33 est pourvue d'une portée conique 330 formant par exemple un mamelon, l'orifice axial étant formé dans le mamelon.

La portion 33 est par ailleurs pourvue d'un filetage externe 332.

La portion 33 présente un diamètre externe inférieur ou égal au diamètre interne minimal du bras 40. De la sorte, la première canalisation 30 peut être engagée, par sa portion 33, dans la pièce aérodynamique 4 depuis sa paroi radialement interne 41, à travers son bras aérodynamique 40, puis ressortir de la pièce 4 par son autre paroi 42.

Les différentes portions de la canalisation 30 sont solidaires les unes des autres.

La portion d'extrémité 31, la portion de serrage 34 et la collerette peuvent ainsi constituer une seule et même pièce.

La portion intermédiaire 32 peut en outre être une autre pièce soudée à la portion de serrage 34, et la portion d'extrémité 31 être une autre pièce soudée à la portion intermédiaire 32.

La servitude 3 comprend également un calorifugeage 320 adapté pour s'étendre autour de la portion intermédiaire 32 de la première canalisation 30.

Le calorifugeage présente une forme globalement tubulaire.

Le calorifugeage a une section extérieure de dimensions adaptées pour que le calorifugeage soit à distance de la surface interne du bras aérodynamique 40, lorsque le calorifugeage est logé à l'intérieur du bras aérodynamique 40.

De la sorte, lorsque la première canalisation 30 est insérée dans un bras 40, le calorifugeage 320 ne touche pas la surface intérieure de ce bras 40. L'espace laissé entre la canalisation 30 et le bras 40 qui l'entoure permet d'éviter des sollicitations mécaniques ou de température entre le bras 40 et le calorifugeage 320.

La présence d'un calorifugeage 320 est néanmoins facultative. En l'absence de ce calorifugeage 320, la canalisation 30 est directement en regard de la surface interne du bras 40.

On prévoit alors que canalisation 30 elle-même présente une section extérieure de dimensions adaptées pour que le la canalisation 30 soit à distance de la surface interne du bras aérodynamique 40, lorsque la canalisation 30 est logée à l'intérieur du bras aérodynamique creux.

En référence à la **figure 6****,** la première canalisation 30 présente une longueur suffisamment courte par rapport au diamètre interne de la virole annulaire 2 pour autoriser, au cours du montage des différentes pièces du carter inter-turbine, un engagement de la virole annulaire 2, suivant l'axe principal X, autour de la canalisation 30 déjà vissée au moyeu 1, et ce jusqu'à ce que sa portion d'extrémité 33 soit alignée avec un orifice radial 20 correspondant de la virole 2.

Cette longueur de la première canalisation, mesurée entre ses deux extrémités 31 et 33, permet notamment un montage de la virole externe 2 après que le moyeu 1 et la première canalisation 30 de la servitude 3 ont été vissées ensemble.

La servitude 3 comprend par ailleurs une deuxième canalisation 36 destinée à prolonger la première canalisation 30 et être mise en communication fluidique avec celle-ci.

Selon un sens d'écoulement d'huile dans la servitude, la deuxième canalisation 36 est située en amont de la première canalisation 30.

La servitude comprend en outre des moyens de raccordement mutuel des deux canalisations 30 et 36.

La deuxième canalisation 36 comprend une portion d'extrémité 361 de forme concave adaptée pour recevoir la portée conique 330 du mamelon formée à l'extrémité 33 de la première canalisation 30.

Le raccord 361 et le mamelon 330 sont maintenus en communication fluidique à l'aide des moyens de raccordement 5.

Les moyens de raccordement 5 peuvent présenter la forme d'une bague 5 de raccordement définissant un logement pour la portion d'extrémité 361, le mamelon 330 et le filetage 332.

La bague de raccordement 5 comprend un filetage interne 52 donnant dans son logement, et adapté pour coopérer avec le filetage externe 332.

La bague de raccordement 5 comprend en outre et un épaulement interne 54 de forme adaptée pour retenir axialement la portion d'extrémité 361 dans le logement lorsque les filetages 332 et 52 sont engagés l'un dans l'autre.

La deuxième canalisation 36 comprend par ailleurs une portion d'extrémité 362 opposée à la portion 361, connectable à une tierce canalisation ou bien à un dispositif fournisseur de lubrifiant.

La portion 362 peut par exemple être identique à la portion d'extrémité 33 de la première canalisation 30.

La deuxième canalisation 36 présente une portion intermédiaire 363 reliant ses deux extrémités 361 et 362, et de diamètre adapté pour traverser l'orifice radial 20 formé dans la virole annulaire 2.

La portion intermédiaire 363 est coudée entre ses deux portions d'extrémité opposées 361 et 362 selon un angle tel que, lorsque la première canalisation est vissée au moyeu 1 et que la deuxième canalisation 36 est raccordée à la première canalisation 30, la portion d'extrémité 362 s'étend parallèlement à l'axe principal X, à une distance radiale plus éloignée de l'axe X que la virole 2. La servitude 3 se trouve donc en partie radialement à l'extérieur du carter inter-turbine, lequel est délimité extérieurement par la virole 2.

Le carter inter-turbine comprend par ailleurs des moyens de blocage 6 de la servitude 3 par rapport à la virole externe 2.

Les moyens de blocage 6 comprennent une bague de maintien 60 annulaire adapté pour entourer la bague de raccordement 5, et ainsi limiter le déplacement de la bague 5 dans un plan normal à l'axe R.

La bague de maintien 60 présente une collerette 61 de forme adaptée pour venir en butée contre la surface radialement extérieure 22 de la virole 2, lorsque la bague de maintien 6 est engagée au moins partiellement dans l'orifice radial de la virole externe 2.

La collerette 61 est percée d'au moins un trou débouchant aligné avec un trou borgne 25 formé dans la surface radialement extérieure 22 de la virole 2 lorsque la lorsque la bague de maintien 60 est engagée au moins partiellement dans l'orifice radial de la virole externe, le trou borgne 25 formant écrou.

Les moyens de blocage 6 comprennent en outre une vis 62 de diamètre adapté pour traverser le trou débouchant formé dans la collerette 61, et être vissée dans le trou borgne formé dans la virole 2, de sorte à bloquer tout déplacement de la bague de maintien parallèlement à l'axe R.

Le diamètre du trou débouchant formé dans la collerette 61 peut être supérieur au diamètre de la vis 62, de sorte à autoriser un léger jeu de la bague de maintien 60 dans un plan normal à l'axe R, lorsque la bague est partiellement engagée dans l'orifice radial de la virole 2.

La bague de raccordement 5 peut présenter une portée sphérique destinée à venir en appui contre la surface intérieure de la bague de maintien 60 et ainsi boucher de façon étanche l'espace annulaire entre les deux bagues.

En référence à la **figure 6bis****,** un joint d'étanchéité 57 annulaire peut être agencé entre la surface intérieure de la bague de blocage 60 et la surface extérieure de la bague de raccordement 5 logée à l'intérieur.

La bague de raccordement 5 peut également comprendre une portion de serrage 58 préhensible par un outil de serrage, faisant saillie par rapport à la surface radialement extérieure 22 de la virole 2.

La bague peut être ainsi serrée facilement par un opérateur, depuis l'extérieur du carter inter-turbine.

### Assemblage de l'ensemble pour turbomachine

Il va maintenant être décrit un procédé d'assemblage des différentes pièces de turbomachines précédemment décrites.

Dans une première étape, la canalisation 30 est fixée au moyeu 1.

Au cours de cette première étape, la portion d'extrémité 31 de la première canalisation 30 est insérée dans la cavité formée dans le moyeu 1, via l'orifice d'accès 10.

Un opérateur met en prise un outil de serrage avec la surface de serrage 316 de la portion de serrage 34, et entraîne en rotation la canalisation 30 selon un sens de vissage du filetage externe 310 dans le filetage 12.

La canalisation 30 est alors vissée au moyeu 1 conformément à la **figure 7****.**

Après le vissage (voire pendant le vissage), les surfaces de guidage 14 et 314 complémentaires sont mises en contact l'une contre l'autre, bloquant ainsi tout déplacement de la canalisation 30 vissée dans un plan normal à l'axe de vissage R.

La localisation de la portion de serrage 34 entre la portion intermédiaire 32 et la portion d'extrémité 31 vissée au moyeu 1 lève les contraintes de diamètre imposées aux portions intermédiaires selon l'état de la technique. Il désormais possible de diminuer le diamètre de la portion intermédiaire 31 sans pour autant fragiliser la canalisation 30 durant son vissage par entraînement de la portion de serrage 34 en rotation, au moyen d'un outil de serrage, et par conséquent le diamètre du bras 40 qui le loge, et par voie conséquence le diamètre du bras aérodynamique qui loge le bras 40.

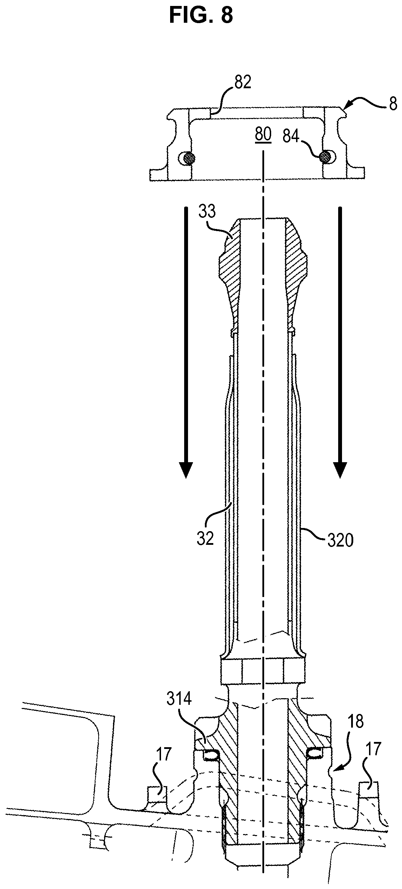

En référence à la **figure 8****,** la fixation de la canalisation 30 au moyeu 1 peut également comprendre le positionnement d'une bague de maintien amovible 8 pour bloquer un déplacement de la collerette 314 suivant l'axe R, par exemple par dévissage incontrôlé de la première canalisation 30 du moyeu 1.

La bague de maintien 8 définit un logement interne 80 de diamètre suffisamment grand pour contenir la collerette 314 et le bord 16 contre lequel la collerette 314 est en butée.

La bague de maintien 8 est en outre adaptée pour être engagée, par rotation de la bague 8 suivant l'axe R, dans au moins une encoche formée dans le moyeu 1, lorsque la collerette 314 et le bord 16 sont le son logement 80.

La bague 8 de maintien présente au moins une butée 82 faisant saillie dans le logement 80, la butée 82 définissant un diamètre interne minimal de la bague 8.

Le diamètre minimal de la bague demeure supérieur au diamètre externe de la première canalisation 30 et du calorifugeage 320.

La butée est adaptée pour limiter voire interdire un déplacement axial suivant l'axe R de la collerette 314, lorsque la bague est engagée dans la ou les encoches 17 du moyeu 1.

La bague de maintien 8 peut comprendre un jonc d'arrêt 84 de dimensions adaptées pour être partiellement reçu dans une gorge 18 correspondante du moyeu 1, de façon à faciliter le positionnement de la bague à une position radiale qui permette son engagement dans la ou les encoches 17 du moyeu 1. Le jonc est formé dans un matériau métallique.

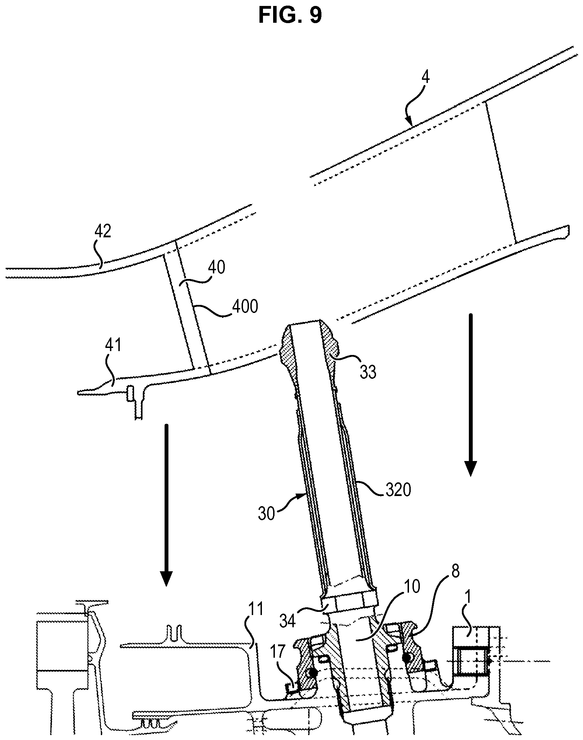

En référence à la **figure 9****,** l'extrémité 33 de la canalisation 30, libre à ce stade du montage, est passée à l'intérieur du bras 40 d'un des carénages aérodynamiques 4.

Le carénage aérodynamique 4, destinée à s'étendre sur un secteur angulaire limité autour de l'axe X, peut être rapprochée du moyeu 1 selon un sens sensiblement centrifuge (par exemple l'axe R) illustré par les flèches de la figure 9, et fixée au moyeu 1 par des moyens appropriés. Pour ce faire, la portion d'extrémité 33 de la canalisation 30 est insérée dans le bras aérodynamique 40 par la surface radialement interne 41, puis ressort du bras 40 par la paroi 42 radialement externe du carénage aérodynamique 4.

Une fois le carénage 4 fixé au moyeu 1, la portion intermédiaire 32 traverse radialement le bras 40 de cette pièce et la portion d'extrémité 33 de la première canalisation 30, se trouve à une position radiale plus éloignée de l'axe X que celle du carénage aérodynamique 4.

Les étapes qui précèdent sont répétées pour chaque carénage aérodynamique 4 jusqu'à former la veine d'air annulaire autour de l'axe X, pour chaque première canalisation 30 à agencer radialement autour de l'axe X, et pour chaque chaque bras de liaison à agencer radialement autour de l'axe X.

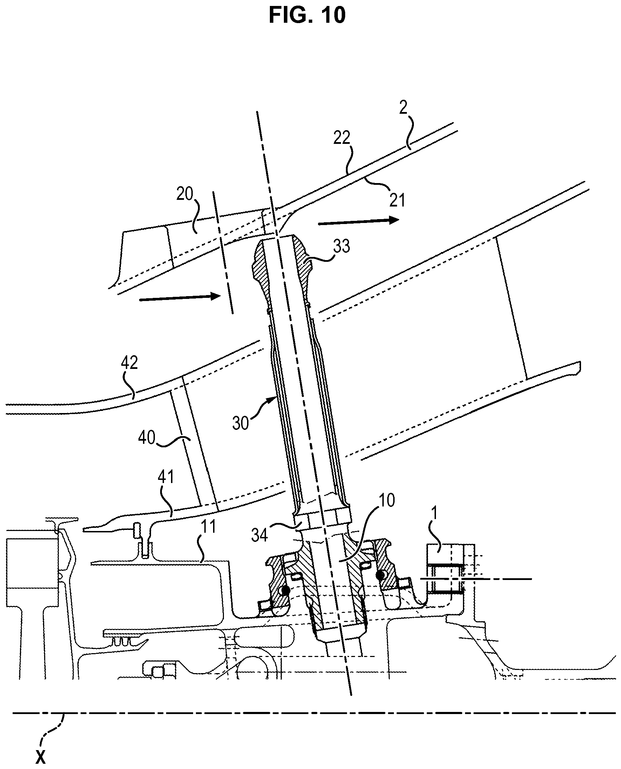

En référence à la **figure 10****,** la virole annulaire 2 est ensuite fixée au moyeu 1 via les bras de liaison B.

Pour ce faire, l'ensemble « moyeu 1 + carénages aérodynamiques 4 définissant la veine d'air + bras de liaison B + premières canalisations 30 traversant des bras de liaison B » est aligné par rapport à la virole 2 de sorte à ce que l'axe de la virole et l'axe du moyeu 1 se confondent en l'axe X. Les bras de liaison B, et les premières canalisations s'étendant alors radialement par rapport à cet axe X commun.

L'ensemble précité est inséré dans la virole annulaire 2 par déplacement le long de l'axe X, par rapport à la virole 2, jusqu'à ce que la portion d'extrémité 33 de chaque canalisation 30 soit alignée avec un orifice radial 20 correspondant de la virole 2. Durant ce déplacement, la portion d'extrémité 33 se trouve à distance de la surface radialement interne 21 de la virole, en raison de la longueur choisie pour la canalisation 30.

Dans cette position alignée avec l'orifice 20, les bras de liaison B sont alors fixés à la virole via des moyens appropriés.

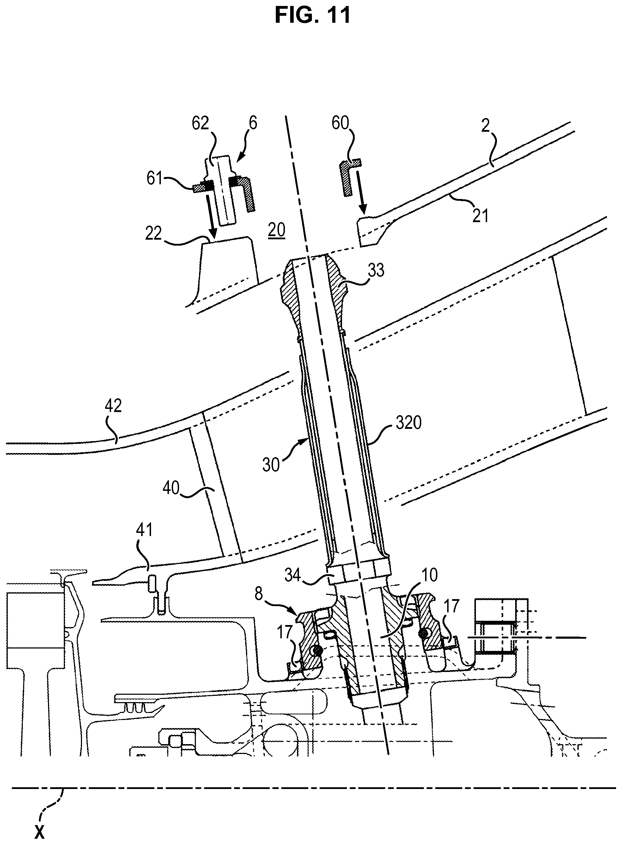

En référence à la **figure 11****,** les moyens de blocage 6 sont fixés à la virole externe 2. Plus précisément, la bague de blocage 60 est partiellement insérée dans l'orifice radial par l'extérieur de la virole, selon un sens centrifuge, jusqu'à ce que sa collerette vienne en butée contre la surface radialement externe de la virole 2, et de façon à ce que son trou débouchant soit aligné avec le trou borgne correspondant formé dans la virole. La vis est ensuite engagée à travers le trou de la collerette, puis dans le trou borgne de la virole 2.

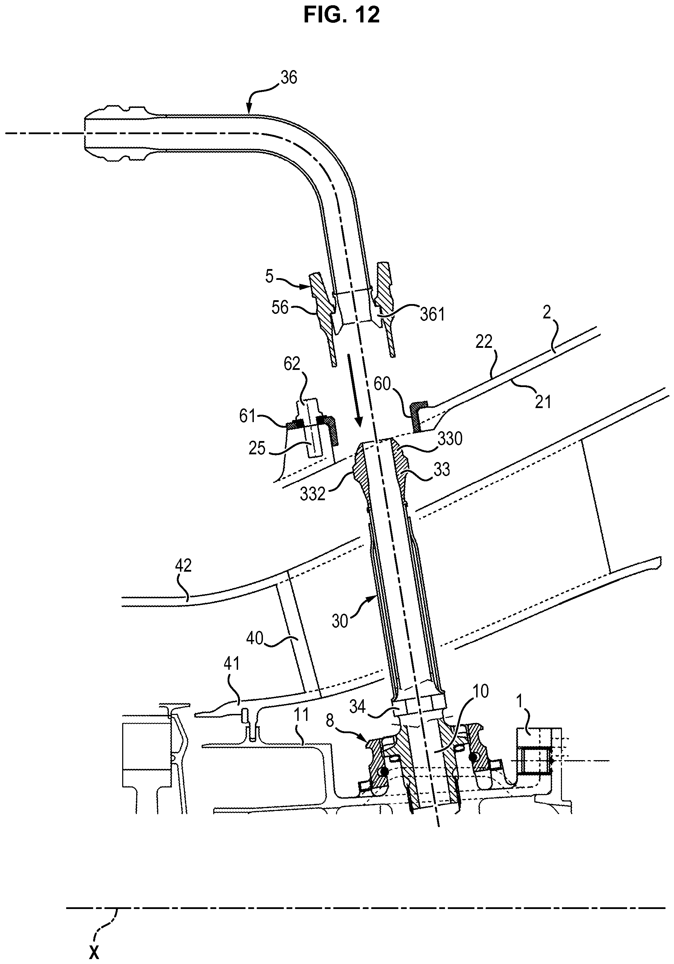

En référence à la **figure 12****,** la deuxième canalisation 36 est mise en communication fluidique avec la première canalisation 30, à l'aide de moyens de raccordement 5.

Plus précisément, la portion d'extrémité 361 est insérée dans le logement de la bague 5 puis raccordée, par exemple par soudage, à la portion intermédiaire courbe 363 de la canalisation 36.

La bague de raccordement est ensuite insérée dans la bague de blocage, elle-même insérée dans l'orifice radial.

La portée sphérique faisant saillie sur le pourtour extérieur de la bague de raccordement presse alors la surface interne de la bague de blocage, bloquant ainsi la bague de raccordement suivant l'axe R, et maintenant ainsi les portions 332 et 361 en communication fluidique l'une avec l'autre.

Dans le même temps, la surface extérieure 332 et la surface intérieure 52, complémentaires, sont mises en contact de sorte à améliorer l'étanchéité de la liaison fluidique entre le mamelon 330 de la canalisation 30 et la portion d'extrémité concave 361 de la canalisation 36.

L'assemblage de la servitude 3 avec le carter inter-turbine tel que représenté sur la figure 3 est alors obtenu.

Le carter inter-turbine est par ailleurs assemblé avec les deux turbines amont et aval, et la servitude 3 est connectée à une source de lubrification.

Dans le procédé d'assemblage proposé, l'étape de vissage de la première canalisation 30 au moyeu 1 comprenant le support de palier est mise en oeuvre avant la fixation de la virole 2 au moyeu 1 par l'intermédiaire des bras de liaison, et avant le montage des carénages aérodynamique 4 qui forme la veine d'air entre les turbines de la turbomachines.

Cet ordre d'assemblage est avantageux en ce qu'il autorise un remplacement de la virole externe 2 et/ou d'au moins un bras de liaison et/ou d'au moins un carénage aérodynamique 4, sans avoir à démonter préalablement la servitude en totalité. En effet, il est possible, au cours d'un tel remplacement, de laisser la première canalisation 30 de la servitude 3 en connexion fluidique avec le support de palier.

Au cours du fonctionnement de la turbomachine, de l'huile en provenance de ladite source est communiquée au support palier pour le lubrifier, en passant successivement par la canalisation 36, puis par la canalisation 30, puis par l'orifice d'accès 10 formé dans moyeu 1.

## Revendications

1. Ensemble pour turbomachine comprenant :
• un carter inter-turbine comprenant :
∘ un moyeu (1) comprenant un support de palier,
∘ une virole (2) s'étendant autour et à distance du moyeu,
∘ au moins un bras (40) s'étendant radialement entre le moyeu (1) et la virole (2),
• au moins une servitude (3) pour lubrifier le support de palier, la servitude (3) comprenant une première canalisation (30) présentant:
∘ une portion d'extrémité (31) vissable au moyeu (1) pour mettre la première canalisation (30) en communication fluidique avec le support de palier,
∘ une portion intermédiaire (32) solidaire de la portion d'extrémité, logée à l'intérieur du bras (40) lorsque la portion d'extrémité (31) est vissée au moyeu (1),
**caractérisé en ce que** ladite canalisation (30) comprenne une portion de serrage (34) solidaire de la portion d'extrémité (31) et adaptée pour être entraînée en rotation par un outil de serrage, la portion de serrage (34) étant située entre portion d'extrémité (31) vissable et la portion intermédiaire (32).

2. Ensemble pour turbomachine selon la revendication précédente, comprenant des moyens d'étanchéité (19) adaptés pour mettre la portion d'extrémité (31) en communication fluidique étanche avec le support de palier, lorsque la portion d'extrémité est vissée au moyeu (1).

3. Ensemble pour turbomachine selon l'une des revendications précédentes, dans lequel la portion de serrage (34) comprend une pluralité de pans de serrage définissant une surface libre de section polygonale (316) préhensible par un outil de serrage.

4. Ensemble pour turbomachine selon l'une des revendications précédentes, dans lequel :
• la virole (2) est de forme annulaire autour d'un axe principal (X), et présente au moins un orifice radial traversant (20),
• la première canalisation (30) comprend une deuxième portion d'extrémité (33) opposée à la portion d'extrémité (31) vissable au moyeu (1),
• la première canalisation (30) présente une longueur suffisamment courte pour autoriser une insertion, suivant l'axe principal, du moyeu (1) et de la première canalisation (30) vissée au moyeu (1) dans la virole (2), jusqu'à ce que la deuxième portion d'extrémité (33) soit alignée avec l'orifice radial (20), la virole (2) s'étendant autour de la première canalisation (30) vissée au moyeu (1).

5. Ensemble pour turbomachine selon la revendication précédente, dans lequel la servitude (3) comprend en outre une deuxième canalisation (36) adaptée pour être mise en communication fluidique avec la première canalisation (30), la servitude (3) étant de dimensions adaptées pour traverser l'orifice radial (20) de la virole (2).

6. Ensemble pour turbomachine selon l'une des revendications précédentes, dans lequel la première canalisation (30) comprend une deuxième portion d'extrémité (33) opposée à la portion d'extrémité (31) vissable au moyeu (1), la servitude (3) présentant, depuis de la portion intermédiaire (32) incluse jusqu'à la deuxième portion d'extrémité (33), un diamètre externe inférieur ou égal au diamètre interne minimal du bras (40).

7. Ensemble pour turbomachine selon l'une des revendications précédentes, dans lequel la servitude (3) comprend en outre un calorifugeage (320) adapté pour s'étendre autour de la portion intermédiaire (32) de la première canalisation (30), le calorifugeage (30) ayant un diamètre externe strictement inférieur ou égal au diamètre interne minimal du bras (40).

8. Ensemble pour turbomachine selon l'une des revendications précédentes, dans lequel la portion d'extrémité (31) présente une surface externe de guidage (312), et dans lequel le moyeu (1) comprend une cavité pour recevoir la portion d'extrémité vissable (31), la cavité présentant un diamètre complémentaire de la surface externe de guidage (312).

9. Ensemble pour turbomachine selon l'une des revendications précédentes, dans lequel la première canalisation (30) comprend une portion formant collerette (314) agencée entre la portion d'extrémité (31) vissable et la portion de serrage (34), la collerette présentant une surface adaptée pour venir en butée contre le moyeu (1) au cours du vissage de la portion d'extrémité au moyeu (1).

10. Procédé d'assemblage d'un ensemble pour turbomachine selon l'une des revendications précédentes, comprenant des étapes de :
• vissage de la portion d'extrémité (31) au moyeu (1), par entraînement en rotation de la portion de serrage à l'aide d'un outil de serrage, de sorte à mettre la première canalisation (30) en communication fluidique avec le support de palier, et
• insertion de la portion intermédiaire (32) dans le bras (40),
• fixation du bras (40) à la virole (2),
dans lequel l'étape de vissage est mise en oeuvre avant l'étape d'insertion et/ou avant l'étape de fixation.

## Patentansprüche

1. Baugruppe für eine Turbomaschine, umfassend:
• ein Zwischenturbinengehäuse, umfassend:
∘ eine Nabe (1), einen Lagerträger umfassend,
∘ einen Ring (2), der sich um die Nabe herum und auf Abstand dazu erstreckt,
∘ mindestens einen Arm (40), der sich radial zwischen der Nabe (1) und dem Ring (2) erstreckt,
• mindestens einen Durchlass (3) zum Schmieren des Lagerträgers, wobei der Durchlass (3) eine erste Kanalisation (30) umfasst, die aufweist:
∘ einen Endabschnitt (31) der auf die Nabe (1) schraubbar ist, um die erste Kanalisation (30) in Fluidverbindung mit dem Lagerträger zu bringen,
∘ einen Zwischenabschnitt (32), der fest mit dem Endabschnitt verbunden ist, im Inneren des Armes (40) untergebracht, wenn der Endabschnitt (31) auf die Nabe (1) geschraubt ist,
**dadurch gekennzeichnet, dass** die Kanalisation (30) einen Klemmabschnitt (34) umfasst, der fest mit dem Endabschnitt (31) verbunden ist, und angepasst ist, um durch ein Klemmwerkzeug in Drehung versetzt zu werden, wobei sich der Klemmabschnitt (34) zwischen dem schraubbaren Endabschnitt (31) und dem Zwischenabschnitt (32) befindet.

2. Baugruppe für eine Turbomaschine nach dem vorstehenden Anspruch, umfassend Abdichtungsmittel (19), die angepasst sind, um den Endabschnitt (31) in dichte Fluidverbindung mit dem Lagerträger zu bringen, wenn der Endabschnitt auf die Nabe (1) geschraubt ist.

3. Baugruppe für eine Turbomaschine nach einem der vorstehenden Ansprüche, wobei der Klemmabschnitt (34) eine Vielzahl von Klemmkanten umfasst, die eine freie Oberfläche mit polygonalem Querschnitt (316) definieren, die durch ein Klemmwerkzeug greifbar ist.

4. Baugruppe für eine Turbomaschine nach einem der vorstehenden Ansprüche, wobei:
• der Ring (2) in einer kreisförmigen Form um eine Hauptachse (X) ist und mindestens eine durchgehende radiale Öffnung (20) aufweist,
• die erste Kanalisation (30) einen zweiten Endabschnitt (33) gegenüber dem Endabschnitt (31) umfasst, der auf die Nabe (1) schraubbar ist,
• die erste Kanalisation (30) eine ausreichend kurze Länge aufweist, um ein Einführen der Nabe (1) und der auf die Nabe (1) geschraubten ersten Kanalisation (30) entlang der Hauptachse in den Ring (2) zu erlauben, bis der zweite Endabschnitt (33) mit der radialen Öffnung (20) fluchtet, wobei sich der Ring (2) um die erste auf die Nabe (1) geschraubte Kanalisation (30) erstreckt.

5. Baugruppe für eine Turbomaschine nach dem vorstehenden Anspruch, wobei der Durchlass (3) weiter eine zweite Kanalisation (36) umfasst, die angepasst ist, um in Fluidverbindung mit der ersten Kanalisation (30) gebracht zu werden, wobei der Durchlass (3) in Abmessungen ist, die angepasst sind, um die radiale Öffnung (20) des Ringes (2) zu durchqueren.

6. Baugruppe für eine Turbomaschine nach einem der vorstehenden Ansprüche, wobei die erste Kanalisation (30) einen zweiten Endabschnitt (33) gegenüber dem auf die Nabe (1) schraubbaren Endabschnitt (31) umfasst, wobei der Durchlass (3) aus dem Zwischenabschnitt (32) heraus, der bis zum zweiten Endabschnitt (33) eingeschlossen ist, einen Außendurchmesser kleiner oder gleich dem minimalen Innendurchmesser des Armes (40) aufweist.

7. Baugruppe für eine Turbomaschine nach einem der vorstehenden Ansprüche, wobei der Durchlass (3) weiter eine Wärmedämmung (320) umfasst, die angepasst ist, um sich um den Zwischenabschnitt (32) der ersten Kanalisation (30) zu erstrecken, wobei die Wärmedämmung (30) einen Außendurchmesser aufweist, der streng kleiner oder gleich dem minimalen Innendurchmesser des Armes (40) ist.

8. Baugruppe für eine Turbomaschine nach einem der vorstehenden Ansprüche, wobei der Endabschnitt (31) eine Außenführungsfläche (312) aufweist, und wobei die Nabe (1) einen Hohlraum zum Aufnehmen des schraubbaren Endabschnitts (31) umfasst, wobei der Hohlraum einen ergänzenden Durchmesser zu der Außenführungsfläche (312) aufweist.

9. Baugruppe für eine Turbomaschine nach einem der vorstehenden Ansprüche, wobei die erste Kanalisation (30) einen Abschnitt umfasst, der einen Kragen (314) bildet, der zwischen dem schraubbaren Endabschnitt (31) und dem Klemmabschnitt (34) angeordnet ist, wobei der Kragen eine Oberfläche aufweist, die angepasst ist, um beim Schrauben des Endabschnitts auf die Nabe (1) auf Anschlag an die Nabe (1) zu kommen.

10. Verfahren zum Zusammensetzen einer Baugruppe für eine Turbomaschine nach einem der vorstehenden Ansprüche, die folgenden Schritte umfassend:
• Schrauben des Endabschnitts (31) auf die Nabe (1), durch in Drehung versetzen des Klemmabschnitts mithilfe eines Klemmwerkzeugs, um die erste Kanalisation (30) in Fluidverbindung mit dem Lagerträger zu bringen, und
• Einführen des Zwischenabschnitts (32) in den Arm (40),
• Fixieren des Armes (40) an dem Ring (2),
wobei der Schritt des Schraubens vor dem Schritt des Einführens und/oder vor dem Schritt des Fixierens ausgeführt wird.

## Claims

1. A turbine engine unit comprising:
∘ an inter-turbine housing comprising:
∘ a hub (1) comprising a bearing holder,
∘ a ferrule (2) extending around and at a distance from the hub,
∘ at least one arm (40) extending radially between the hub (1) and the ferrule (2),
• at least one lead-through (3) for lubricating the bearing holder, the lead-through (3) comprising a first pipe (30) having:
∘ an end portion (31) that can be screwed to the hub (1) to put the first pipe (30) into fluid communication with the bearing holder,
∘ an intermediate portion (32) attached to the end portion placed inside the arm (40) when the end portion (31) is screwed to the hub (1),
**characterized in that** said pipe (30) comprises a tightening portion (34) integral with the end portion (31) and suitable to be driven in rotation by a gripping tool, the tightening portion (34) is situated between the end portion (31) that can be screwed and the intermediate portion (32).

2. The turbine engine unit according to the preceding claim, comprising at least one seal (19) for putting the end portion (31) into sealed fluid communication with the bearing holder, when the end portion is screwed to the hub (1).

3. The assembly for turbine engines according to one of the preceding claims, in which the tightening portion (34) comprises a plurality of tightening sections defining a free surface of polygonal section (316) grippable by a gripping tool.

4. The turbine engine unit according to one of the preceding claims, in which:
• the ferrule (2) has an annular shape around a principal axis (X), and has at least one radial through opening (20),
• the first pipe (30) comprises a second end portion (33) opposite to the end portion (31) which can be screwed to the hub (1),
• the first pipe (30) has a sufficiently short length to allow insertion, along the principal axis, of the hub (1) and of the first pipe (30) screwed to the hub (1) into the ferrule (2), until the second end portion (33) is aligned with the radial through opening (20) while the ferrule (2) extends around the first pipe (30) screwed to the hub (1).

5. The turbine engine unit according to the preceding claim, in which the lead-through (3) also comprises a second pipe (36) suitable for being put into fluid communication with the first pipe (30), the lead-through (3) having dimensions suitable for passing through the radial through opening (20) of the ferrule (2).

6. The assembly for turbine engines according to one of the preceding claims, in which the first pipe (30) comprises a second end portion (33) opposite to the end portion (31) which can be screwed to the hub (1), the lead-through (3) having, from the intermediate portion (32) included until the second end portion (33), an outer diameter smaller than or equal to a minimum inner diameter of the arm (40).

7. The turbine engine unit according to one of the preceding claims, in which the lead-through (3) also comprises thermal insulation (320) extending around the intermediate portion (32) of the first pipe (30), the thermal insulation (30) having an outer diameter strictly less than or equal to a minimum inner diameter of the arm (40).

8. The turbine engine unit according to one of the preceding claims, in which the end portion (31) has an external guide surface (312), and in which the hub (1) comprises a cavity to receive the end portion that can be screwed (31), the cavity having a diameter complementary to the external guide surface (312).

9. The turbine engine unit according to one of the preceding claims, in which the first pipe (30) comprises a portion forming a collar (314) arranged between the end portion (31) which can be screwed and the tightening portion (34), the collar having a surface suitable for coming into abutment against the hub (1) during screwing of the end portion to the hub (1).

10. An assembly method for a turbine engine unit according to one of the preceding claims, comprising steps of:
• screwing the end portion (31) to the hub (1), by driving in rotation the tightening portion using a gripping tool, so as to put the first pipe (30) into fluid communication with the bearing holder, and
• inserting the intermediate portion (32) into the arm (40),
• attaching the arm (40) to the ferrule (2),
wherein the screwing step is carried out before the inserting step and/or before the attaching step.
